# FASCICULE DE BREVET EUROPEEN

(11) **EP 0 636 804 B1**
(45) Date de publication et mention de la délivrance du brevet: **30.12.1998**
(21) Numéro de dépôt: 94401532.0
(22) Date de dépôt: 05.07.1994
(51) Int. Cl.: F16C 35/06, F16C 19/52

(54) **Montage de palier sur un arbre**
Lagerbefestigung auf eine Welle
Mounting of a bearing on a shaft

(30) Priorité: 29.07.1993 FR 9309324
(43) Date de publication de la demande: 01.02.1995
(73) Titulaire: S.N.R. ROULEMENTS, 74010 Annecy Cédex (FR)
(72) Inventeur: Alef, Denis, F-74000 Annecy (FR)
(74) Mandataire: Ernst-Schonberg, Michel

(56) Documents cités:
- EP-A- 0 345 214
- WO-A-82/00692
- BE-A- 503 023
- FR-A- 688 712
- FR-A- 1 128 154
- FR-A- 2 217 588
- FR-A- 2 662 477
- US-A- 3 359 047
- US-A- 4 772 139
- PATENT ABSTRACTS OF JAPAN vol. 15, no. 109 (M-1093) 15 Mars 1991 & JP-A-03 004 026 (NGK SPARK PLUG) 10 Janvier 1991
- PATENT ABSTRACTS OF JAPAN vol. 14, no. 19 (M-919) 16 Janvier 1990 & JP-A-01 261 519 (NACHI FUJIKOSHI) 18 Octobre 1989

## Description

L'invention concerne un montage de palier sur un arbre et concerne plus particulièrement un montage de palier à corps roulants disposés entre une bague extérieure et une bague intérieure, dans lequel la bague intérieure est portée par un manchon élastique d'immobilisation de ladite bague intérieure sur un arbre.

La publication FR-A-2217588 décrit un montage dans lequel la bague intérieure possède des portées coniques et dans laquelle s'emboîte un manchon fendu qui possède une surface extérieure complémentaire à ladite portée. L'effet de serrage du manchon au contact de l'arbre et de la bague est obtenu à la suite d'un déplacement axial du manchon.

La publication FR-A-2662477 décrit un montage de palier pour emploi à température élevée dans lequel les bagues et les corps roulants sont réalisés en céramique. Un ensemble de cages flexibles assure le maintien du roulement et compense les dilatations thermiques radiales différentielles du support métallique du roulement.

L'invention a pour objet un montage de palier à sécurité augmentée susceptible d'éviter le déplacement relatif accidentel de la bague du roulement par rapport à l'arbre.

L'invention a également pour objet un montage de palier qui assure un bon centrage et l'immobilisation de la bague du roulement par rapport à l'arbre indépendamment de la température du fonctionnement du roulement, notamment lorsque les coefficients de dilatation de la bague et de l'arbre sont différents.

L'invention a également pour objet un montage de palier dans lequel le roulement est monté sur l'arbre au moyen d'une douille intermédiaire solidaire dudit arbre, qui possède un moyen de réglage du diamètre extérieur de la douille au contact du diamètre intérieur de la bague du roulement.

Selon l'invention la douille possède une surface extérieure bombée dont le sommet est au contact de la surface intérieure de la bague intérieure du palier et des portées intérieures localement immobilisées au contact dudit arbre.

Selon une autre caractéristique du montage, le coefficient de dilatation de la douille est inférieur au coefficient de dilatation de l'arbre et supérieur au coefficient de dilatation de la bague.

Cette caractéristique crée artificiellement à la surface de la douille une portée du roulement et permet de conserver dans la plage des températures de fonctionnement du palier, un ajustement serré sensiblement constant au contact de la bague intérieure du roulement.

La caractéristique précitée permet également d'obtenir une liaison rigide entre la douille et une bague du roulement préservée des contraintes intérieures.

La caractéristique précitée permet encore l'absorption par l'arbre et la douille de l'ensemble des contraintes qui s'exercent dans le montage.

D'autres caractéristiques et avantages de l'invention apparaîtront à la lecture de la description du montage de palier, en référence au dessin annexé dans lequel :
- la figure 1 est une demi coupe axiale du montage conforme à l'invention,
- la figure 2 est une demi coupe axiale d'une variante de réalisation du montage,
- la figure 3 est une représentation linéaire des variations dimensionnelles du montage sous l'effet d'une dilatation différentielle de ses constituants.

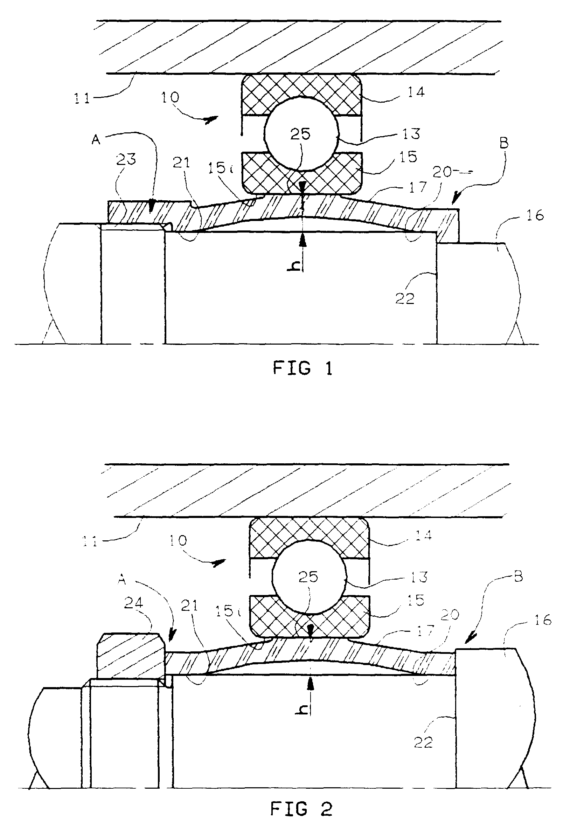

On désignera dans la suite de la description par les mêmes références, les éléments et organes du montage représentés aux figures 1 et 2.

Comme représenté aux figures 1 et 2, un palier 10 est monté dans un élément de carter 11 et porte un arbre rotatif 16.

Le palier 10 est un palier à corps roulants 13 disposés entre une bague extérieure 14 montée dans l'élément de carter 11 et une bague intérieure 15. Le palier 10 est monté sur un arbre 16 et une douille intermédiaire 17 solidaire de l'arbre 16 qui porte la bague intérieure 15.

La douille 17 possède deux portées de montage 20, 21 intérieures serrées sur l'arbre 16 par un procédé de frettage qui assure à la douille 17 une bonne qualité de centrage et d'immobilisation en rotation comme représenté à la figure 1.

L'immobilisation axiale de la douille 17 sur l'arbre 16 est assuré par une extension radiale (fig. 1) d'une extrémité B de ladite douille 17 au contact d'un épaulement 22 de l'arbre 16. L'autre extrémité A de la douille 17 est liée à l'arbre par une extension qui s'étend axialement au contact d'une portée filetée 23 de l'arbre 16 (fig. 1) ou qui prend appui comme représenté à la figure 2 sur un écrou 24.

Dans l'exemple représenté à la figure 1, une surface bombée est réalisée sur la douille 17 par usinage.

En rapport à la figure 2, sous l'effet de la force de serrage communiquée par l'écrou 24 sur la douille 17, celle-ci est soumise à une force axiale de compression qui se traduit par une expansion radiale en son milieu et qui confère à la douille une surface extérieure bombée dont le sommet 25 est au contact de la surface intérieure 15i de la bague 15. Dans une telle configuration, les portées de montage 20, 21, de la douille sont axialement localisées de part et d'autre du plan diamétral qui contient le sommet de la surface extérieure bombée de la douille.

Au cours du montage de l'ensemble constitué par l'arbre 16 et par la douille 17, celui-ci est placé dans la bague 15 centrée sur le sommet de la surface bombée de la douille.

Si le coefficient de dilatation du matériau constitutif de la douille est inférieur à celui de l'arbre 16, l'échauffement de l'arbre a pour effet d'améliorer le contact entre la douille 17 et l'arbre 16.

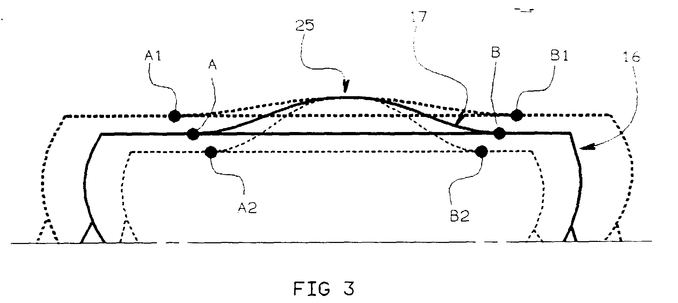

La figure 3 illustre les variations dimensionnelles du montage sous l'effet de la température, où l'on retrouve les extrémités de fixation A et B de part et d'autre du sommet 25. Lors d'un échauffement, ces extrémités se déplacent en A1 et B1. Lors d'un refroidissement ces extrémités se déplacent en A2 et B2.

Lorsque la température varie, la dilatation supérieure de l'arbre 16 par rapport à la douille 17 étire cette dernière (chauffage) et réduit la hauteur h de la surface bombée ou, au contraire resserre la douille (refroidissement) et augmente cette hauteur h.

Il apparaît alors que le déplacement radial du sommet 25 n'est plus directement proportionnel aux coefficients de dilatation des matériaux employés.

La dilatation radiale de la section de plus fort diamètre de la douille sera par conséquent atténuée en fonction des coefficients de dilatation respectifs de l'arbre 16 et de la douille 17, et en fonction des caractéristiques dimensionnelles de la douille, notamment la hauteur h et la longueur entre les extrémités de fixation A et B.

Le montage précité est particulièrement adapté aux roulements en céramique dans un environnement en acier.

## Revendications

1. Montage d'un palier à corps roulants (13) disposés entre une bague extérieure (14) et une bague intérieure (15) sur un arbre (16) dans lequel la bague intérieure (15) est portée par une douille (17) intermédiaire solidaire dudit arbre (16), caractérisé par le fait que la douille (17) possède une surface extérieure bombée dont le sommet est au contact de la surface intérieure (15i) de la bague intérieure (15) du palier et des portées intérieures (20, 21) localement immobilisées au contact de l'arbre (16).

2. Montage selon la revendication 1, caractérisé par le fait que les portées du montage (20, 21) de la douille (17) sont frettées sur l'arbre (16) et sont axialement localisées de part et d'autre du plan diamétral contenant le sommet de la surface extérieure bombée de la douille.

3. Montage selon l'une quelconque des revendications 1 ou 2, caractérisé par le fait qu'une extrémité de la douille (17) s'étend radialement au contact d'un épaulement (22) de butée porté par l'arbre (16) et que l'autre extrémité de la douille (17) s'étend axialement au contact d'une portée filetée (23) de l'arbre (16).

4. Montage selon l'une quelconque des revendications 1 à 3, caractérisé par le fait que le coefficient de dilatation de la douille est inférieur au coefficient de dilatation de l'arbre.

5. Montage selon la revendication 4, caractérisé par le fait que le coefficient de dilatation de la douille est supérieur au coefficient de dilatation de la bague.

6. Montage selon l'une quelconque des revendications 1 à 3, caractérisé par le fait que la surface bombée de la douille (17) est réalisée par usinage.

7. Montage selon la revendication 1, caractérisé par le fait que la douille (17) est montée en compression axiale entre l'épaulement (22) de butée porté par l'arbre (16) et la force d'un écrou de serrage (24) et subit une force radiale d'expansion sous l'action de l'effort de serrage exercée par ledit écrou (24).

## Claims

1. A bearing assembly with rolling bodies (13) disposed between an outer ring (14) and an inner ring (15) on a shaft (16) in which the inner ring (15) is borne by an intermediate bushing (17) rigid with the shaft (16), characterised in that the bushing (17) comprises a convex outer surface whose apex is in contact with the inner surface (15i) of the inner ring (15) of the bearing and inner journal bearings (20, 21) locally locked in contact with the shaft (16).

2. An assembly as claimed in claim 1, characterised in that the assembly journal bearings (20, 21) of the bushing (17) are bound on the shaft (16) and are axially located on either side of the diamctrical plane containing the apex of the convex outer surface of the bushing.

3. An assembly as claimed in any one of claims 1 or 2, characterised in that one end of the bushing (17) extends radially in contact with an abutment shoulder (22) borne by the shaft (16) and in that the other end of the bushing (17) extends axially in contact with a threaded journal bearing (23) of the shaft (16).

4. An assembly as claimed in any one of claims 1 to 3, characterised in that the coefficient of expansion of the bushing is lower than the coefficient of expansion of the shaft.

5. An assembly as claimed in claim 4, characterised in that the coefficient of expansion of the bushing is higher than the coefficient of expansion of the ring.

6. An assembly as claimed in any one of claims 1 to 3, characterised in that the convex surface of the bushing (17) is formed by machining.

7. An assembly as claimed in claim 1, characterised in that the bushing (17) is mounted in axial compression between the abutment shoulder (22) borne by the shaft (16) and the force of a clamping nut (24) and is subject to a radial expansion force under the action of the clamping effort exerted by this nut (24).

## Patentansprüche

1. Anordnung eines Lagers mit Wälzkörpern (13), die zwischen einem äußeren Ring (14) und einem inneren Ring (15) auf einer Welle (16) angeordnet sind, bei der der innere Ring (15) von einer mit der Welle (16) fest verbundenen Zwischenhülse (17) getragen wird, dadurch gekennzeichnet, daß die Hülse (17) eine gewölbte Außenfläche, deren Scheitel mit der Innenfläche (15i) des inneren Ringes (15) des Lagers in Kontakt ist, und innere Auflageflächen (20, 21) besitzt, die örtlich in Kontakt mit der Welle (16) festgehalten werden.

2. Anordnung nach Anspruch 1, dadurch gekennzeichnet, daß die Auflageflächen (20, 21) für die Montage der Hülse (17) auf die Welle (16) aufgeschrumpft sind und sich axial auf beiden Seiten der diametralen Ebene befinden, welche den Scheitel der gewölbten Außenfläche der Hülse enthält.

3. Anordnung nach einem der Ansprüche 1 oder 2, dadurch gekennzeichnet, daß sich ein Ende der Hülse (17) radial in Kontakt mit einer von der Welle (16) getragenen Anschlagschulter (22) erstreckt und daß sich das andere Ende der Hülse (17) axial in Kontakt mit einem Gewindebereich (23) der Welle (16) erstreckt.

4. Anordnung nach einem der Ansprüche 1 bis 3, dadurch gekennzeichnet, daß der Ausdehnungskoeffizient der Hülse kleiner als der Ausdehnungskoeffizient der Welle ist.

5. Anordnung nach Anspruch 4, dadurch gekennzeichnet, daß der Ausdehnungskoeffizient der Hülse größer als der Ausdehnungskoeffizient des Ringes ist.

6. Anordnung nach einem der Ansprüche 1 bis 3, dadurch gekennzeichnet, daß die gewölbte Oberfläche der Hülse (17) durch maschinelle Bearbeitung hergestellt worden ist.

7. Anordnung nach Anspruch 1, dadurch gekennzeichnet, daß die Hülse (17) unter axialer Kompression zwischen der von der Welle (16) getragenen Anschlagschulter (22) und der Kraft einer Klemmutter (24) montiert ist und unter der von der Mutter (24) ausgeübten Klemmwirkung eine radiale Ausdehnungskraft erfährt.
